Europäisches Patentamt

European Patent Office

Office européen des brevets

(19)

(11) Numéro de publication : **0 200 602 B1**

# (12) FASCICULE DE BREVET EUROPEEN

(45) Date de publication du fascicule du brevet :
16.01.91 Bulletin 91/03

(51) Int. Cl.⁵ : **G02F 1/133, G09G 3/36**

(21) Numéro de dépôt : 86400690.3

(22) Date de dépôt : 28.03.86

(54) **Dispositif d'affichage matriciel à cristal liquide à commande tridimensionnelle et son procédé de commande.**

(30) Priorité : 05.04.85 FR 8505247

(43) Date de publication de la demande :
10.12.86 Bulletin 86/45

(45) Mention de la délivrance du brevet :
16.01.91 Bulletin 91/03

(84) Etats contractants désignés :
CH DE GB IT LI NL

(56) Documents cités :
FR-A- 2 385 165
FR-A- 2 532 455
GB-A- 2 069 213
PATENTS ABSTRACTS OF JAPAN, vol. 7, no.
138 (P-204) [1283], 16 juin 1983; & JP - A - 58 54
317 (FUJITSU K.K.) 31-03-1983

(73) Titulaire : COMMISSARIAT A L'ENERGIE
ATOMIQUE Etablissement de Caractère
Scientifique Technique et Industriel
31/33, rue de la Fédération
F-75015 Paris (FR)

(72) Inventeur : Clerc, Jean-Frédéric
7, rue Casimir Brenier
F-38120 Saint Egreve (FR)
Inventeur : Leroux, Thierry
19, rue Marcel Cachin
F-38600 Fontaine (FR)

(74) Mandataire : Mongrédien, André et al
c/o BREVATOME 25, rue de Ponthieu
F-75008 Paris (FR)

Jouve, 18, rue Saint-Denis, 75001 PARIS

## Description

La présente invention a pour objet un dispositif d'affichage matriciel à cristal liquide à commande tridimensionnelle et son procédé de commande.

L'invention s'applique en particulier en optoélectronique et principalement dans la commande de dispositifs d'affichage matriciels à cristaux liquides, utilisés par exemple comme convertisseurs d'informations électriques en informations optiques, pour le traitement des images optiques en temps réel, et pour l'affichage analogique.

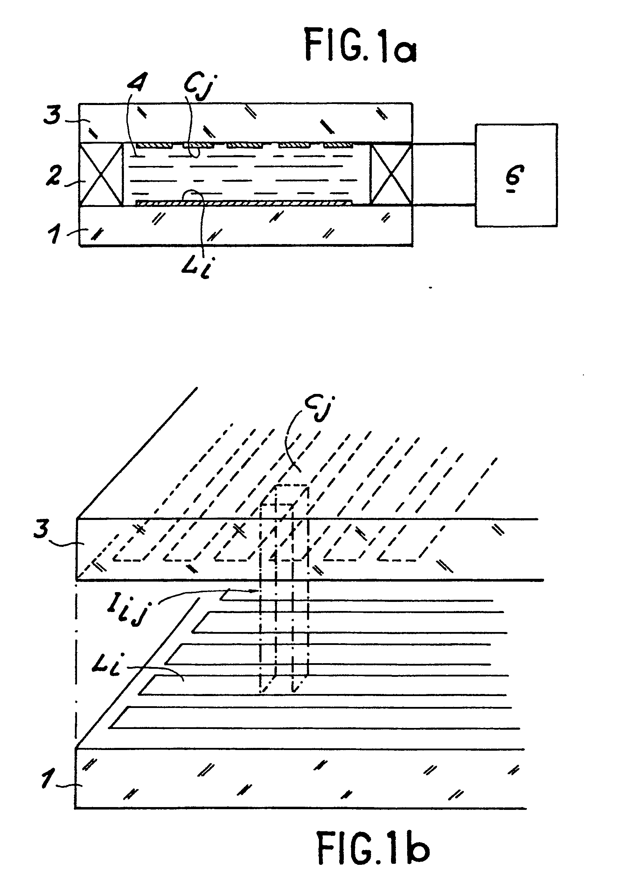

La figure 1a représente un dispositif d'affichage matriciel à cristal liquide à bandes croisées selon l'art antérieur, la figure 1b représentant ce dispositif en vue éclatée.

Sur la figure 1a sont représentées deux parois isolantes 1,3 en regard l'une de l'autre, maintenues écartées par un joint de scellement 2 disposé sur leurs pourtours et entre lesquelles une couche de cristal liquide 4 est introduite.

Sur la face interne de la paroi 1 est répartie une première famille de m lignes d'électrodes, notées $L_i$, parallèles, avec i entier tel que $1 \leq i \leq m$, constituées par des bandes conductrices continues et sur la face interne de l'autre paroi 3 est répartie une deuxième famille de q colonnes d'électrodes, notées $C_j$, parallèles, avec j entier tel que $1 \leq j \leq q$, constituées également par des bandes conductrices, les m lignes et les q colonnes d'électrodes étant croisées. Ces m lignes et ces q colonnes d'électrodes servent à véhiculer des signaux électriques, respectivement des signaux lignes et des signaux colonnes appropriés à l'excitation du cristal liquide. Ces signaux sont produits de façon connue par une source d'alimentation 6.

Sur la figure 1b, représentant ce dispositif en vue éclatée, on voit la première famille de m lignes d'électrodes, notées $L_i$ et la deuxième famille de q colonnes d'électrodes, notées $C_j$, réparties respectivement sur les parois 1 et 3.

Les m lignes et les q colonnes d'électrodes étant croisées, une zone $I_{ij}$ de cristal liquide est définie par la région de recouvrement de la ligne $L_i$ et de la colonne $C_j$. Chaque zone $I_{ij}$ définit un point image élémentaire du dispositif d'affichage ; ce dernier comprend donc mxq points images répartis en matrice.

De façon générale, on applique sur les m lignes et les q colonnes d'électrodes des signaux électriques alternatifs en phase ou en opposition de phase, l'amplitude des signaux lignes étant légèrement supérieure à celle des signaux colonnes.

Lorsque le signal de la ligne $L_i$ et le signal de la colonne $C_j$ sont en phase, le signal résultant est égal à la différence des amplitudes en valeur absolue du signal ligne et du signal colonne. Le signal résultant est alors inférieur à la tension de seuil $V_s$ du cristal liquide, correspondant à la tension minimale nécessaire pour exciter le cristal liquide. Aussi, dans la zone de recouvrement $I_{ij}$ le cristal liquide n'étant pas excité, on a affichage d'un point noir. En revanche, lorsque le signal de la ligne $L_i$ et le signal de la colonne $C_j$ sont en opposition de phase, le signal résultant a une amplitude égale à la somme des amplitudes en valeur absolue du signal ligne et du signal colonne. Le signal résultant crée un champ électrique dans la zone de recouvrement $I_{ij}$ qui provoque généralement une orientation collective de molécules dans cette zone et donc l'affichage de blanc.

En utilisant l'orientation sélective des molécules et l'excitation ponctuelle du cristal liquide, on fait apparaître ainsi une image sur l'ensemble de la cellule.

Au croisement de chaque ligne et de chaque colonne est associé par exemple un interrupteur tel qu'un transistor en couche mince qui transmet à la zone $I_{ij}$ correspondante, le signal résultant du signal ligne appliqué à la ligne $L_i$ et du signal colonne appliqué à la colonne $C_j$. Il y a donc autant de transistors que de points images.

Dans le dispositif d'affichage matriciel décrit précédemment, pour afficher mxq points, on utilise donc un grand nombre de tansistors mxq, ainsi qu'un grand nombre de connexions m+q ; ces connexions correspondent à l'ensemble des entrées des signaux électriques sur les m lignes et les q colonnes d'électrodes.

On pourra également se reporter à l'état de la technique constitué par l'abrégé japonais JP-A-58 54317 dans lequel un dispositif d'affichage matriciel comportant des regroupements d'électrodes est décrit.

L'invention a pour but de remédier à ces inconvénients en réalisant notamment un dispositif d'affichage comprenant un nombre de connexions et de transistors inférieur à celui des dispositifs connus de l'art antérieur, sans pour autant diminuer le nombre de points images élémentaires.

De façon plus précise, l'invention a pour objet un dispositif d'affichage matriciel à cristal liquide comprenant deux parois isolantes en regard, recouvertes respectivement d'une première famille d'électrodes constituée de m électrodes lignes et d'une deuxième famille d'électrodes constituée de q électrodes colonnes, ces électrodes lignes et colonnes étant croisées, une couche de cristal liquide intercalée entre la première et la deuxième familles, et des moyens pour appliquer des signaux électriques aux électrodes permettant d'exciter le cristal liquide, caractérisé en ce que chaque électrode ligne comporte n petites bandes alignées ; en ce que chaque électrode colonne comporte r petites bandes alingées, les n petites bandes et les r petites bandes étant regroupées respectivement en p paquets lignes et p paquets colonnes, avec p=n.r, chaque paquet ligne regroupant s petites bandes parallèles et chaque paquet colonne regroupant t petites bandes parallèles, avec $s=m.n/p$ et $t=q.r/p$, un point image $I_{ijk}$ étant défini par la région correspondant à la superposition d'une petite bande $l_i$ d'un paquet ligne $P_k$ et d'une petite bande $c_j$ du paquet correspondant $T_k$, i, j et k étant des entiers tels que $1 \leq i \leq s$, $1 \leq j \leq t$ est $1 \leq k \leq p$. Ce dispositif est caractérisé en outre en ce que chaque petite bande $l_i$ est associée à un interrupteur servant d'une part à relier entre elles les n petites bandes d'une électrode ligne et à relier entre elles des électrodes lignes afin de former s connexions lignes et d'autre part à relier entre elles les s petites bandes de chaque paquet ligne $P_k$ afin de former p premières connexions paquets et en ce que chaque petite bande $c_j$ est associée à un interrupteur servant d'une part à relier entre elles les r petites bandes d'une électrode colonne et à relier entre elles des électrodes colonnes afin de former t connexions colonnes et, d'autre part, à relier entre elles les t petites bandes de chaque paquet colonne $T_k$ afin de former p secondes connexions paquets, le paquet ligne $P_k$ et le paquet colonne $T_k$ étant interconnectés par les première et seconde connexions paquets correspondantes.

Selon un mode de réalisation du dispositif d'affichage, les électrodes lignes $(L_a)$, $(L_{2s+1-a})$, $(L_{2s+a})$, $(L_{4s+1-a})$ et ainsi de suite sont reliées entre elles pour former s connexions lignes et les électrodes colonnes $(C_b)$, $(C_{2t+1-b})$, $(C_{2t+b})$, $(C_{4t+1-b})$ et ainsi de suite sont reliées entre elles pour former t connexions colonnes, a et b étant des entiers tels que $1 \leq a \leq m$ et $1 \leq b \leq q$.

Selon un autre mode de réalisation du dispositif d'affichage, les électrodes lignes $(L_a)$, $(L_{a+s})$, $(L_{a+2s})$, $(L_{a+3s})$ et ainsi de suite sont reliées entre elles pour former s connexions lignes et les électrodes colonnes $(C_b)$, $(C_{b+t})$, $(C_{b+2t})$, $(C_{b+3t})$ et ainsi de suite sont reliées entre elles pour former t connexions colonnes, a et b étant des entiers tels que $1 \leq a \leq m$ et $1 \leq b \leq q$.

Selon un mode préféré de réalisation du dispositif d'affichage, les interrupteurs sont des transistors en couche mince.

L'invention a également pour objet un procédé de commande d'un dispositif d'affichage conforme à l'invention ; ce procédé consiste à appliquer de façon continue sur les t connexions colonnes des signaux électriques périodiques de période T avec inversion de polarité à chaque demi-période T/2, ces signaux colonnes étant alternativement positifs puis négatifs sur chaque demi-période T/2, à appliquer sur les s connexions lignes des signaux électriques impulsionnels périodiques de période T avec inversion de polarité à chaque demi-période T/2, chaque signal ligne étant non nul pendant un temps ligne $T_L = T/2(2.s)$, l'ensemble des temps lignes étant réparti sur une demi-période T/2, et à appliquer par les p connexions paquets des signaux électriques impulsionnels périodiques de période $T_L$, chaque signal paquet étant non nul pendant un temps $T_C = T_L/p$, l'ensemble des temps $T_C$ étant réparti sur un temps $T_L$, $T_C$ correspondant au temps de charge d'un interrupteur.

Selon un mode préféré de mise en oeuvre du procédé, les signaux lignes et les signaux colonnes sont soit en phase, soit en opposition de phase.

Selon un autre mode préféré de mise en oeuvre du procédé, l'interrupteur étant un transistor, les signaux paquets sélectionnent soit l'état passant, soit l'état bloquant desdits transistors associés aux connexions paquets.

Selon un autre mode préféré de mise en oeuvre du procédé, les signaux électriques appliqués sont des signaux rectangulaires.

D'autres caractéristiques et avantages de l'invention ressortiront mieux de la description qui va suivre donnée à titre purement illustratif et non limitatif. La description est faite en référence aux figures 1 à 3 annexées, dans lesquelles :

– les figures 1a et 1b, déjà décrites, représentent en coupe et en vue éclatée un dispositif d'affichage matriciel à bandes croisées selon l'art antérieur,

– la figure 2 représente schématiquement en vue éclatée un exemple de dispositif d'affichage matriciel conforme à l'invention,

– la figure 3 représente le chronogramme des différents signaux appliqués aux différentes connexions du dispositif représenté en figure 2 ainsi que des exemples de signaux résultants, aux points images correspondants.

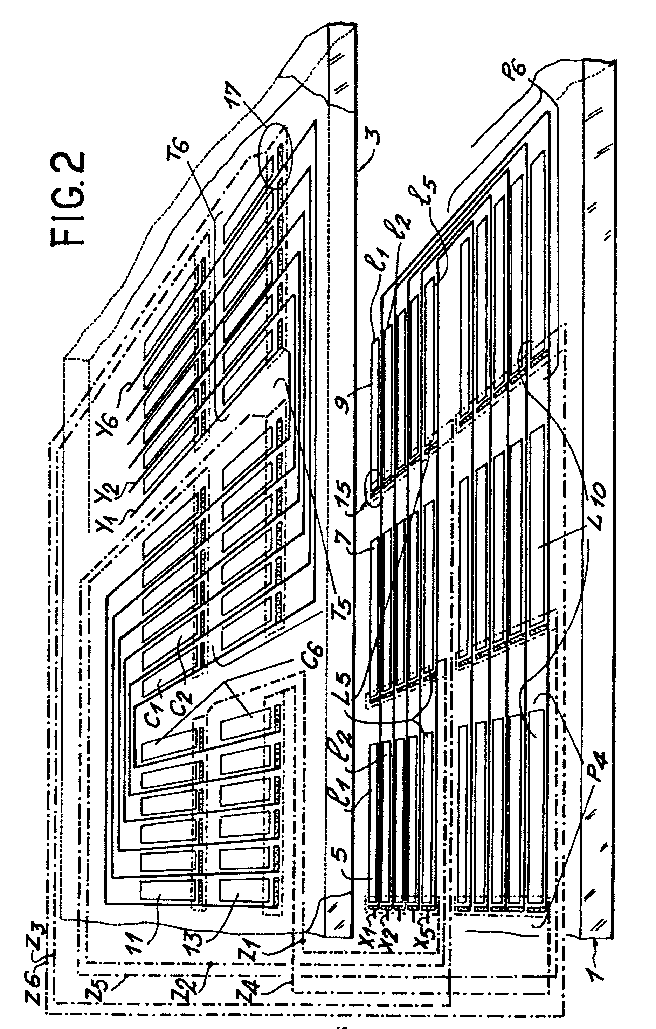

La figure 2 représente un exemple de dispositif d'affichage matriciel conforme à l'invention.

Le dispositif de l'invention comprend, comme ceux de l'art antérieur (figures 1) deux parois 1, 3 en regard l'une de l'autre, recouvertes respectivement par une première famille de m lignes d'électrodes, notées $L_a$, et par une deuxième famille de q colonnes d'électrodes notées $C_b$, a et b étant des entiers tels que $1 \leq a \leq m$ et $1 \leq b \leq q$. Une couche de cristal liquide 4 est intercalée entre les deux familles d'électrodes.

Selon l'invention, la première famille de m lignes d'électrodes est constituée de bandes conductrices discontinues formées chacune de n petites bandes lignes 5,7, 9. De même la deuxième famille de q colonnes d'électrodes est constituée de bandes conductrices discontinues formées chacune de r petites bandes colonnes 11, 13. On obtient de cette façon m.n petites lignes et q.r petites colonnes. L'ensemble de ces petites lignes et petites colonnes sont regroupées respectivement en p paquets lignes et p paquets colonnes avec p=n.r, disposées en matrice.

Dans l'exemple de la figure 2, on a pris m=10, n=3, q=18 et r=2 ; on a de ce fait 30 petites lignes et 36 petites colonnes qui sont regroupées en p=6 paquets.

Chaque paquet ligne, noté $P_k$, est donc constitué de s petites lignes, notées $l_i$, et chaque paquet colonne, noté $T_k$, est constitué de t petites colonnes, notées $c_j$, avec

$$s = \frac{m \cdot n}{p} \quad \text{et} \quad t = \frac{q \cdot r}{p},$$

i, j et k étant des entiers tels que $1 \leq i \leq s$, $1 \leq j \leq t$ et $1 \leq k \leq p$. Dans l'exemple de la figure 2, on a ainsi s=5 et t=6.

Avec un tel dispositif, un point image $I_{ijk}$ est défini par la région de recouvrement entre une petite ligne $l_i$ d'un paquet ligne $P_k$ et une petite colonne $c_j$ du paquet colonne correspondant $T_k$.

Pour commander ce dispositif, on associe respectivement à chaque petite ligne $l_i$ et à chaque petite colonne $c_j$, un interrupteur 15, 17, tel qu'un transistor en couche mince, relié à chaque petite ligne $l_i$ et à chaque petite colonne $c_j$ par le drain (ou la source) de celui-ci. Les transistors 15 associés aux petites lignes, notées $l_i$, permettent ainsi par l'intermédiaire de leur source (ou de leur drain), de relier entre-elles les n petites lignes constituant une ligne d'électrodes et de relier entre elles les lignes $(L_a)$, $(L_{a+s})$, $(L_{a+2s})$ etc... ou bien les lignes $(L_a)$, $(L_{2s+1-a})$, $(L_{2s+a})$, $(L_{4s+1-a})$, etc... comme dans l'exemple de la figure, pour former s connexions lignes, notées $X_i$.

Ainsi, dans l'exemple de la figure 2, la ligne $L_1$ est reliée à la ligne $L_{10}$, la ligne $L_2$ à la ligne $L_9$, etc... formant ainsi 5 connexions lignes.

Les transistors 15 permettent également, par l'intermédiaire de leur grille, de relier entre elles les s petites lignes de chaque paquet ligne $P_k$ pour former p premières connexions paquets, notées $Z_k$, p étant égal à 6 dans l'exemple de la figure.

Les transistors 17 associés aux petites colonnes, notées $c_j$, permettent, par l'intermédiaire de leur source (ou de leur drain), de la même façon, de relier entre elles les r petites colonnes formant une colonne d'électrode et de relier entre elles les colonnes $(C_b)$, $(C_{b+t})$, $(C_{b+2t})$ ; etc... ou bien les colonnes $(C_b)$, $(C_{2t+1-b})$, $(C_{2t+b})$, $(C_{4t+1-b})$, etc... comme dans l'exemple de la figure, pour former t connexions colonnes, notées $Y_j$.

Ainsi, on voit sur la figure 2, la colonne $C_1$ reliée à la colonne $C_{12}$, elle-même reliée à la colonne $C_{13}$, la colonne $C_2$ reliée à la colonne $C_{11}$, elle-même reliée la colonne $C_{14}$,... et ainsi de suite. On obtient de cette façon t=6 connexions colonnes $Y_j$.

Les transistors 17 permettent également, par l'intermédiaire de leur grille, de relier entre elles les t petites colonnes de chaque paquet colonne $T_k$ pour former p deuxièmes connexions paquets, notées $Z_k$.

Le paquet ligne $P_k$ et le paquet colonne $T_k$ sont interconnectés par les premières et secondes connexions paquets correspondantes pour former p connexions paquets, notées $Z_k$.

Dans la description ci-dessus on a donné deux modes de connexions des lignes d'électrodes et des colonnes d'électrodes pour former respectivement s connexions lignes et t connexions colonnes, mais tout autre mode de connexions permettant d'obtenir également s connexions lignes et t connexions colonnes peut être envisagé sans pour autant sortir du cadre de l'invention.

On a donc en définitive s connexions lignes, notées $X_i$, t connexions colonnes, notées $Y_j$ et p connexions paquets, notées $Z_k$, i, j et k étant des entiers tels que $1 \leq i \leq s$, $1 \leq j \leq t$ et $1 \leq k \leq p$, avec s=5, t=6 et p=6 dans l'exemple de la figure.

Chaque zone de recouvrement entre la petite bande ligne $l_i$ d'un paquet $P_k$ et la petite bande colonne $c_j$ du paquet correspondant $T_k$ définit un point image $I_{ijk}$. Le signal qui est vu par ce point image résulte donc de la superposition d'un signal appliqué à la connexion ligne correspondante, $X_i$, appelé signal ligne $F_i$, d'un signal appliqué à la connexion colonne correspondante $Y_j$, appelé signal colonne $G_j$ et d'un signal appliqué à la connexion paquet correspondante $Z_k$, appelé signal paquet $H_k$. Le signal résultant au point image $I_{ijk}$ sera noté $R_{ijk}$.

La commande d'un tel dispositif se fait donc par la superposition de trois types de signaux différents $F_i$, $G_j$, $H_k$, ce type de commande est donc appelé commande tridimensionnelle.

Le signal ligne $F_i$ est reçu par l'ensemble des transistors 15 reliés entre eux par leur source (ou leur drain) et associés aux petites bandes lignes $l_i$ correspondantes. Le signal colonne $G_j$ est reçu par l'ensemble des transistors 17 reliés entre eux par leur source (ou leur drain) et associés aux petites bandes colonnes $c_j$ correspondantes.

En revanche, le signal paquet $H_k$ permet de laisser passer ou non le signal ligne $F_i$ et le signal colonne $G_j$ sur la ligne $l_i$ et la colonne $c_j$ respectivement du paquet $P_k$, $T_k$, ce qui permet de différencier les différentes petites bandes lignes $l_i$ des p paquets lignes $P_k$ et les différentes petites bandes colonnes $c_j$ des p paquets colonnes $T_k$. En effet, les transistors 15, 17 des paquets $P_k$, $T_k$ correspondants sont sélectionnés en même temps, suivant le signal appliqué, ils sont soit à l'état passant, dans ce cas ils laissent passer le signal ligne $F_i$ et le signal colonne $G_j$, respectivement sur la ligne $l_i$ du paquet $P_k$ et la colonne $c_j$ du paquet correspondant $T_k$, soit en haute impédance, dans ce cas, ils ne laissent passer aucun signal.

Ainsi, par un dispositif d'affichage conforme à l'invention, à partir de m lignes, q colonnes et p paquets respectivement de s petites lignes et de t petites colonnes, on obtient m.q=s.t.p points images en utilisant seulement (s+t).p transistors et s+t+p connexions.

Dans l'exemple représenté sur la figure 2, on a 10 lignes (m), 18 colonnes (q) et 6 paquets (p) de 5 petites lignes (s) et de 6 petites colonnes (t) chacun ; avec un tel dispositif on peut donc afficher 180 points en employant 66 transistors et 17 connexions alors qu'avec un dispositif comme celui décrit en figure 1, avec 10 lignes (m) et 18 colonnes (q) on affiche 180 points en employant 180 transistors (m.q) et 28 connexions (m+q).

Les transistors utilisés dans ce type de dispositif sont de préférence des transistors en couche mince.

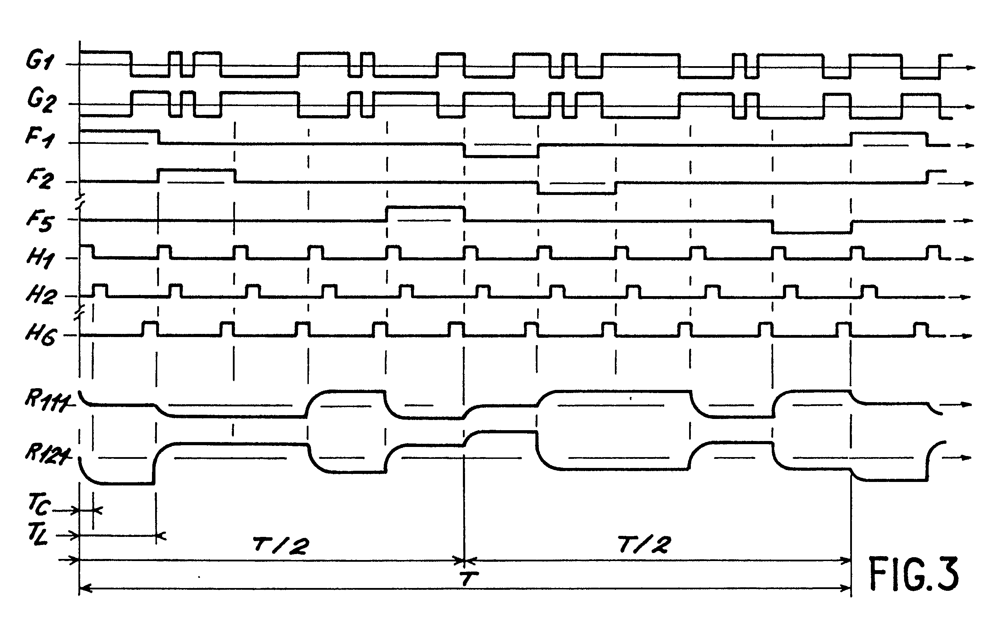

La figure 3 représente le chronogramme des différents signaux de commande du dispositif d'affichage de la figure 2. Sur cette figure sont représentés deux exemples de signaux colonnes $G_1$ et $G_2$ appliqués aux connexions colonnes $Y_1$, $Y_2$, les signaux lignes $F_1$, $F_2$,..., $F_5$ appliqués aux différentes connexions lignes $X_1$, $X_2$,..., $X_5$, les signaux paquets $H_1$, $H_2$,..., $H_6$ appliqués aux différentes connexions paquets $Z_1$, $Z_2$,..., $Z_6$ ainsi que deux exemples de signaux résultants $R_{111}$ et $R_{121}$ aux point images correspondants $I_{111}$ et $I_{121}$.

Les signaux lignes $F_1$, $F_2$,..., $F_5$ et colonnes $G_1$, $G_2$, ..., $G_6$ du dispositif d'affichage sont des signaux notamment rectangulaires de période T. Ces signaux ont leur polarité qui s'inverse à chaque demi-période, notée T/2, pour protéger le cristal liquide des courants continus et prolonger ainsi sa durée de vie. La moyenne de ces signaux est donc nulle à chaque période.

Le temps T/2 correspond au rafraîchissement périodique de l'information dans le cristal liquide et donc au maintien des points excités. Le temps T/2 est généralement de l'ordre de 20 ms.

Les signaux lignes $F_1$, $F_2$,..., $F_5$ sont impulsionnels, ils sont non nuls pendant un temps ligne noté $T_L$, égal à T/(2.s), s représentant le nombre de connexions lignes du dispositif d'affichage. Les s temps lignes sont répartis ainsi sur chaque demi-période T/2, à chaque temps $T_L$ correspondant une seule impulsion non nulle d'un signal ligne. Le temps $T_L$ est le temps nécessaire à la mémorisation du signal.

Dans l'exemple décrit s=5, la durée des différents signaux $F_1$, $F_2$,..., $F_5$ est donc respectivement de T/10, c'est-à-dire de l'ordre de 4 ms.

Le signal colonne $G_j$ est appliqué de façon continue, il est soit en phase avec le signal ligne $F_1$ considéré, dans ce cas, le point image correspondant est noir, soit en opposition de phase avec celui-ci et dans ce cas, le point image est blanc, avec i et j dans le dispositif d'affichage décrit, entiers tels que $1 \leq i \leq 5$ et $1 \leq j \leq 6$. Dans l'exemple fourni à la figure 3, les signaux $G_1$ et $G_2$ relatifs aux connexions colonnes $Y_1$ et $Y_2$ sont identiques mais de polarité opposée. Suivant l'affichage désiré, on envoie donc sur les connexions colonnes $Y_1$ ou $Y_2$, soit le signal colonne $G_1$, soit le signal colonne $G_2$.

Les signaux paquets $H_1$, $H_2$,..., $H_6$ commandent à la fois l'état des transistors associés aux petites bandes lignes, notées $I_i$, d'un paquet ligne $P_k$ et ceux associés aux petites bandes colonnes $c_j$ du paquet colonne correspondant $T_k$, avec k entier tel que $1 \leq k \leq 6$. Les signaux paquets sont des signaux rectangulaires impulsionnels. La durée de ces signaux, notée $T_C$, est égale à $T_L/p$, p représentant le nombre de connexions paquets $Z_k$ et $T_L$ le temps ligne ; $T_C$ est donc égal à T/(2.s.p). Ce temps $T_C$ correspond au temps de charge d'un transistor. Les p temps $T_C$ sont répartis sur chaque temps $T_L$, à chaque temps $T_L$ correspondant une seule impulsion non nulle d'un signal paquet. Dans le cas particulier de l'exemple décrit s=5 et p=6, $T_C$ a donc une durée de l'ordre de 0,66 ms.

Pendant ce temps $T_C$ une connexion paquet $Z_k$ reçoit le signal impulsionnel $H_k$, les transistors 15 associés aux petites bandes lignes du paquet $P_k$ et les transistors 17 associés aux petites bandes colonnes du paquet $T_k$ sont à l'état passant. En dehors d'une impulsion, sur le reste d'un temps ligne $T_L$, le signal paquet $H_k$ est nul, les transistors 15, 17 des paquets $P_k$ et $T_k$ correspondants sont à l'état de haute impédance, c'est-à-dire bloquant.

Lorsque les transistors associés à une connexion paquet $Z_k$ sont à l'état passant, ils laissent passer les signaux lignes $F_i$ sur les lignes $I_i$ correspondantes du paquet $P_k$ et les signaux colonnes $G_j$ sur les colonnes $c_j$ correspondantes du paquet $T_k$. La superposition de ces signaux provoque l'affichage ou l'extinction des points images correspondants, respectivement lorsque les signaux $F_i$ et $G_j$ sont en phase ou en opposition de phase.

Lorsque ces transistors sont bloquants, aucun signal ne passe sur les lignes et les colonnes des paquets $P_k$ et $T_k$, l'amplitude du signal vu par les points images correspondants décroît lentement, après écoulement du temps de mémorisation correspondant au temps ligne $T_L$.

Ainsi, dans l'exemple de la figure 3, le signal $R_{111}$ correspondant à la superposition d'un signal ligne $F_1$ appliqué à la connexion $X_1$ d'un signal colonne $G_1$ appliqué à la connexion $Y_1$ et d'un signal paquet $H_1$ appliqué à la connexion $Z_1$, est nul au début d'une demi-période T/2 pendant un temps ligne $T_L$ à cause des signaux $F_1$ et $G_1$ en phase pendant l'état passant des transistors associés à la ligne $I_1$ et à la colonne $c_1$ sélectionnés par le signal paquet $Z_1$ ; ce signal nul persiste ensuite pendant toute la durée du temps $T_L$ correspondant au temps de mémorisation ; ceci se traduit par l'affichage d'un point image $I_{111}$ noir.

Après écoulement de ce premier temps ligne $T_L$, le signal ligne $F_1$ étant nul pendant le reste du temps T/2, le signal $R_{111}$ sera donc celui du signal colonne $G_1$ au moment où le signal paquet $H_1$ sélectionnera l'état passant du transistor correspondant à cette petite bande colonne $c_1$. L'amplitude du signal colonne étant inférieure à la valeur de la tension de seuil du cristal liquide, l'affichage de noir au point $I_{111}$ persistera sur le reste du temps T/2.

Il en est de même à chaque temps T/2.

Pour le point image $I_{121}$ correspondant à la superposition d'un signal ligne $F_1$ appliqué à la connexion $X_1$, d'un signal colonne $G_2$ appliqué à la connexion $Y_2$ et d'un signal paquet $H_1$, appliqué à la connexion $Z_1$, au début d'une demi-période T/2, pendant le temps $T_L$, le signal résultant $R_{121}$ a une amplitude égale à la somme des amplitudes en valeur absolue du signal ligne $F_1$ et du signal colonne $G_2$ du fait que ces signaux soient en opposition de phase pendant l'état passant des transistors, associés à la ligne $l_1$ et à la colonne $c_2$ sélectionnés par le signal paquet $H_1$. Ceci se traduit par un point $I_{121}$ en blanc. Comme pour le point $I_{111}$, le signal $F_1$ étant nul sur le reste du temps $T/2$, le signal $R_{121}$ dépend du signal colonne $G_2$ appliqué à la connexion $Y_2$ lorsque le transistor de la colonne $c_2$ est sélectionné par le signal paquet $H_1$. L'affichage de blanc au point $I_{121}$ persiste donc sur le reste du temps $T/2$. Il en est de même à chaque demi-période $T/2$.

Le dispositif d'affichage décrit précédemment, à commande tridimensionnelle, c'est-à-dire utilisant trois types de signaux appliqués à trois types de connexions, permet d'avoir des rapports entre le nombre de points affichés (s.t.p) et le nombre de connexions (s+t+p) et entre le nombre de points affichés (s.t.p) et le nombre de transistors (s+t).p utilisés, supérieurs à ceux des dispositifs connus.

## Revendications

1. Dispositif d'affichage matriciel à cristal liquide comprenant deux parois isolantes (1, 3) en regard, recouvertes respectivement d'une première famille d'électrodes constituée de m électrodes lignes et d'une deuxième famille d'électrodes constituée de q électrodes colonnes, ces électrodes lignes et colonnes étant croisées, une couche de cristal liquide (4) intercalée entre la première et la deuxième familles, et des moyens (6) pour appliquer des signaux électriques aux électrodes permettant d'exciter le cristal liquide (4), caractérisé en ce que chaque électrode ligne comporte $\underline{n}$ petites bandes alignées (5, 7, 9) ; en ce que chaque électrode colonne comporte $\underline{r}$ petites bandes alignées (11, 13), les $\underline{n}$ petites bandes et les $\underline{r}$ petites bandes étant regroupées respectivement en $\underline{p}$ paquets lignes et $\underline{p}$ paquets colonnes, avec p=n.r, chaque paquet ligne regroupant $\underline{s}$ petites bandes parallèles et chaque paquet colonne regroupant t petites bandes parallèles, avec s=m.n/p et t=q.r/p, un point image $I_{ijk}$ étant défini par la région correspondant à la superposition d'une petite bande $l_i$ d'un paquet ligne $P_k$ et d'une petite bande $c_j$ du paquet colonne correspondant $T_k$, i, j, k étant des entiers tels que $1 \leq i \leq s$, $1 \leq j \leq t$ et $1 \leq k \leq p$ ; en ce que chaque petite bande $l_i$ est associée à un interrupteur (15) servant d'une part à relier entre elles les $\underline{n}$ petites bandes d'une électrode ligne et à relier entre elles des électrodes lignes afin de former s connexions lignes et, d'autre part, à relier entre elles les s petites bandes de chaque paquet ligne $P_k$ afin de former p premières connexions paquets ; et en ce que chaque petite bande $c_j$ est associée à un interrupteur (17) servant d'une part à relier entre elles les $\underline{r}$ petites bandes d'une électrode colonne, et à relier entre elles des électrodes colonnes afin de former t connexions colonnes et, d'autre part, à relier entre elles les t petites bandes de chaque paquet colonne $T_k$ afin de former p secondes connexions paquets, le paquet ligne $P_k$ et le paquet colonne $T_k$ étant interconnectés par les première et seconde connexions paquets correspondants.

2. Dispositif d'affichage selon la revendication 1, caractérisé en ce que les électrodes lignes $(L_a)$, $(L_{2s+1-a})$, $(L_{2s+a})$, $(L_{4s+1-a})$ et ainsi de suite sont reliées entre elles pour former s connexions lignes et que les électrodes colonnes $(C_b)$, $(C_{2t+1-b})$, $(C_{2t+b})$, $(C_{4t+1-b})$ et ainsi de suite, sont reliées entre elles pour former t connexions colonnes, a et b étant des entiers tels que $1 \leq a \leq m$ et $1 \leq b \leq q$.

3. Dispositif d'affichage selon la revendication 1, caractérisé en ce que les électrodes lignes $(L_a)$, $(L_{a+s})$ à, $(L_{a+2s})$, $(L_{a+3s})$ et ainsi de suite sont reliées entre elles pour former s connexions lignes et que les électrodes colonnes $(C_b)$, $(C_{b+t})$, $(C_{b+2t})$, $(C_{b+3t})$ et ainsi de suite, sont reliées entre elles pour former t connexions colonnes, a et b étant des entiers tels que $1 \leq a \leq m$ et $1 \leq b \leq q$.

4. Dispositif d'affichage selon l'une quelconque des revendications 1 à 3, caractérisé en ce que les interrupteurs (15, 17) sont des transistors en couche mince.

5. Procédé de commande d'un dispositif d'affichage selon l'une quelconque des revendications 1 à 4, caractérisé en ce que l'on applique de façon continue sur les t connexions colonnes des signaux électriques $(G_1, G_2)$ périodiques de période T avec inversion de polarité à chaque demi-période $T/2$, ces signaux colonnes $(G_1, G_2)$ étant alternativement positifs puis négatifs sur chaque demi-période $T/2$, en ce que l'on applique sur les s connexions lignes des signaux électriques $(F_1, F_2,...)$ impulsionnels périodiques, de période T avec inversion de polarité à chaque demi-période $T/2$, chaque signal ligne étant non nul pendant un temps ligne $T_L=T/(2.s)$, l'ensemble des temps lignes étant réparti sur une demi-période $T/2$, et en ce que l'on applique sur les p connexions paquets des signaux électriques $(H_1, H_2...)$ impulsionnels périodiques, de période $T_L$, chaque signal paquet étant non nul pendant un temps $T_C=T_L/p$, l'ensemble des temps $T_C$ étant réparti sur un temps $T_L$, $T_C$ correspondant au temps de charge d'un interrupteur.

6. Procédé de commande selon la revendication 5, caractérisé en ce que les signaux lignes et les signaux colonnes sont soit en phase, soit en opposition de phase.

7. Procédé de commande selon l'une quelconque des revendications 5 et 6, caractérisé en ce que l'interrupteur (15, 17) étant un transistor, les signaux paquets $(H_1, H_2,...)$ sélectionnent soit l'état passant, soit l'état bloquant desdits transistors associés aux connexions paquets.

8. Procédé de commande selon l'une quelconque des revendications 5 à 7, caractérisé en ce que les signaux électriques appliqués sont des signaux rectangulaires.

## Ansprüche

1. Flüssigkristallmatrixanzeige mit zwei gegenüberliegenden, isolierenden Wänden (1, 3), die jeweils mit einer ersten Elektrodenfamilie, die aus m Zeilenelektroden besteht, und einer zweiten Elektrodenfamilie, die aus q Spaltenelektroden besteht, bedeckt sind, wobei diese Spalten- und Zeilenelektroden gekreuzt sind ; einer Flüssigkristallschicht (4), die zwischen der ersten und zweiten Familie engeordnet ist ; und Vorrichtungen (6) zum Anlegen elektrischer Signale an die Elektroden, die ermöglichen, den Flüssigkristall (4) anzuregen, dadurch gekennzeichnet, daß jede Zeilenelektrode $\underline{n}$ kleine, aneinandergereihte Bänder (5, 7, 9) umfaßt ; daß jede Spaltenelektrode $\underline{r}$ kleine, aneinandergereihte Bänder (11, 13) umfaßt, wobei die $\underline{n}$ kleinen Bänder und die $\underline{r}$ kleinen Bänder jeweils in $\underline{p}$ Zeilenpaketen und $\underline{p}$ Spaltenpaketen mit $p=n.r$ zusammengefaßt sind, wobei jedes Zeilenpaket $\underline{s}$ kleine, parallele Bänder und jedes Spaltenpaket $\underline{t}$ kleine parallele Bänder mit $s=m.n/p$ und $t=q.r/p$ zusammenfaßt, wobei ein Bildpunkt $I_{ijk}$ durch den entsprechenden Überlagerungsbereich eines kleinen Bandes $I_i$ eines Zeilenpakets $P_k$ und eines kleinen Bandes $c_j$ des entsprechenden Spaltenpekats $T_k$ gebildet wird, wobei i, j, k genze Zahlen sind mit $1\leq i\geq s$, $1\leq j\geq t$ und $1\leq k\leq p$ ; daß jedes kleine Band $I_i$ mit einem Schalter (15) verbunden ist, der einerseits dazu dient, die $\underline{n}$ kleinen Bänder einer Elektrodenzeile untereinander zu verbinden und die Elektrodenzeilen untereinander zu verbinden, um $\underline{s}$ Zellenverbindungen zu bilden, und andererseits dazu dient, die s kleinen Bänder jedes Zeilenpakets $P_k$ untereinander zu verbinden, um p erste Paketverbindungen zu bilden ; und daß jedes kleine Band $c_j$ mit einem Schalter (17) verbunden ist, der einerseits dezu dient, die $\underline{r}$ kleinen Bänder einer Elektrodenspalte untereinander zu verbinden und die Elektrodenspalten untereinander zu verbinden, um t Zeilenverbindungen zu bilden, und andererseits dazu dient, die $\underline{t}$ kleinen Bänder jedes Zeilenpakets $T_k$ untereinander zu verbinden, um p zweite Paketverbindungen zu bilden, wobei des Zeilenpaket $P_k$ und des Spaltenpaket $T_k$ über die entsprechenden ersten und zweiten Paketverbindungen verbunden sind.

2. Anzeigevorrichtung nech Anspruch 1, dadurch gekennzeichnet, daß die Elektrodenzeilen $(L_a)$, $(L_{2s+1-a})$, $(L_{2s+a})$, $(L_{4s+1-a})$ und so fort untereinander verbunden sind, um s Zeilenverbindungen zu bilden, und daß die Spaltenelektroden $(C_b)$, $(C_{2t+1-b})$, $(C_{2t+b})$, $(C_{4t+1-b})$ und so fort untereinander verbunden sind, um t Spaltenverbindungen zu bilden, wobei a und b ganze Zahlen sind mit $1\leq a\geq m$ und $1\leq b\geq q$.

3. Anzeigevorrichtung nach Anspruch 1, dadurch gekennzeichnet, daß die Elektrodenzeilen $(L_a)$, $(L_{a+s})$, $(L_{a+2s})$, $(L_{a+3s})$ und so fort untereinander verbunden sind, um s Zeilenverbindungen zu bilden, und daß die Spaltenelektroden $(C_b)$, $(C_{b+t})$, $(C_{b+2t})$, $(C_{b+3t})$ und so fort untereinander verbunden sind, um t Spaltenverbindungen zu bilden, wobei a und b ganze Zahlen sind mit $1\leq a\geq m$ und $1\leq b\geq q$.

4. Anzelgevorrichtung nach einem der Ansprüche 1 bis 3, dadurch gekennzeichnet, daß die Schalter (15, 17) Dünnfilmtransistoren sind.

5. Steuerungsverfahren für eine Anzeigevorrichtung nach einem der Ansprüche 1 bis 4, dadurch gekennzeichnet, daß men kontinuierlich an die t Spaltenverbindungen periodische, elektrische Signale $(G_1, G_2)$ mit einer Periode T mit Polaritätsoonversion nach jeder Halbperiode T/2 anlegt, wobei die Spaltensignale $(G_1, G_2)$ abwechseind positiv und dann negativ in jeder Halbperiode T/2 sind ; daß man an die s Zeilenverbindungen periodische, elektrische Pulssignale $(F_1, F_2...)$ mit einer Periode T mit Polaritätsinversion nach jeder Halbperiode T/2 anlegt, wobei jedes Zeilensignal nicht Null während einer Zeilenzeit $T_L=T/(2.s)$ ist, wobei die Gesamtheit der Zeilenzeiten über einer Halbperiode T/2 verteilt ist ; und daß man an die p Paketverbindungen periodische, elektrische Pulssignale $(H_1, H_2...)$ mit einer Periode $T_L$ anlegt, wobei jedes Paketsignal nicht Null während einer Zeit $T_C=T_L/p$ ist, wobei die Gesamtheit der Zeiten $T_C$ über einer Zeit $T_L$ verteilt ist, wobei $T_C$ der Ladezeit eines Schalter entspricht.

6. Steuerungsverfahren nach Anspruch 5, dadurch gekennzeichnet, daß die Zeilensignale und die Spaitensignale entweder in Phase oder in Gegenphase sind.

7. Steuerungsverfahren nach einem der Ansprüche 5 und 6, dadurch gekennzeichnet, daß der Schalter (15, 17) ein Transistor ist, wobei die Paketsignale $(H_1, H_2...)$ entweder den leitenden oder sperrenden Zustand des mit der Paketverbindung verbundenen Transistors auswählen.

8. Steuerungsverfahren nach einem der Ansprüche 5 bis 7, dadurch gekennzeichnet, daß die angelegten elektrischen Signale Rechtecksignale sind.

## Claims

1. Liquid crystal matrix display comprising two facing insulating walls (1, 3), respectively covered by a first group of electrodes constituted by m row electrodes and a second group of electrodes constituted by q column electrodes, said row and column electrodes intersecting, a liquid crystal layer (4) placed between the first and second groups and means (6) for applying electrical signals to the electrodes making it possible to excite the liquid crystal (4), characterized in that each row electrode has n small aligned strips (5, 7, 9), in that each column electrode has r small aligned strips (11, 13), the n small strips and the r small strips being respectively grouped into p row packets and p column packets, with $p=n.r$, each row packet grouping s small parallel strips and each column packet grouping t small parallel strips, with $s=m.n/p$ and $t=q.r/p$, an image point $I_{ijx}$ being defined by the region corresponding to the super imposing of a small strip $I_i$ of a row packet $P_k$ and a small strip $c_j$ of the corresponding packet $T_k$, i, j and k being integers such that $1\leq i\leq s$, $1\leq j\leq t$ and $1\leq k\leq p$, in that each small strip $I_i$ is associated with a switch (15) serving on the one hand to interconnect the n small strips of a row electrode and interconnect the row electrodes in order to form s row connections and on the other hand interconnect the s small strips of each row packet $P_k$ in order to form p first packet connections and in that each small strip $c_j$ is associated with a switch (17) used on the one hand for interconnecting the r small strips of a column electrode and for interconnecting the column electrodes in order to form t column connections and on the other hand interconnect the t small strips of each column packet $T_k$ in order to form p second packet connections, the row packet $P_k$ and the column packet $T_k$ being interconnected by the first and second corresponding packet connections.

2. Display according to claim 1, characterized in that the electrode rows $(L_a)$, $(L_{2s+1-a})$, $(L_{2s+a})$, $(L_{4s+1-a})$ and so on are interconnected to form s row connections and the electrode columns $(C_b)$, $(C_{2t+1-b})$, $(C_{2t+b})$, $(C_{4t+1-b})$ and so on are interconnected to form t column connections, a and b being integers such that $1\leq a\leq m$ and $1\leq b\leq q$.

3. Display according to claim 1, characterized in that the electrode rows $(L_a)$, $(L_{a+s})$, $(L_{a+2s})$, $(L_{a+3s})$ and so on are interconnected to form s row connections and the electrode column s $(C_b)$, $(C_{b+t})$, $(C_{b+2t})$, $(C_{b+3t})$ and so on are interconnected to form t column connections, a and b being integers such that $1\leq a\leq m$ and $1\leq b\leq q$.

4. Display according to any one of the claims 1 to 3, characterized in that the switches (15, 17) are thin film transistors.

5. Process for the control of a display according to any one of the claims 1 to 4, characterized in that there is a continuous application to the t column connections of cyclic electric signals $(G_1, G_2)$ of cycle T with polarity reversal for each half-cycle $T/2$, said column signals $(G_1, G_2)$ being alternately positive and then negative on each half-cycle $T/2$, applying to the s row connections cyclic pulse-type electric signals $(F_1, F_2 \ldots)$ of cycle T with polarity reversal for each half-cycle $T/2$, each row signal being non-zero during a row time $T_L=T/(2.s)$, all the row times being distributed over a half-cycle $T/2$, and applying to p packet connections cyclic pulse-type electric signals $(H_1, H_2$

$\ldots)$ of cycle $T_L$, each packet signal being non-zero during a time $T_c=T_L/p$, all the times Tc-being distributed over a time $T_L$, $T_c$ corresponding to the charging time of a switch.

6. Control process according to claim 5, characterized in that the row signals and the column signals are either in phase or in phase opposition.

7. Control process according to either of the claims 5 and 6, characterized in that as the switch (15, 17) is a transistor, the packet signals $(H_1, H_2 \ldots)$ either select the passing state, or the blocking state of the transistors associated with the packet connections.

8. Control process according to any one of the claims 5 to 7, characterized in that the electrical signals applied are square-wave signals.

# FIG.1a

# FIG.1b

FIG.2

FIG.3

EP 0 200 602 B1